# FASCICULE DE BREVET EUROPEEN

(11) **EP 1 029 492 B1**
(45) Date de publication et mention de la délivrance du brevet: **20.08.2003**
(21) Numéro de dépôt: 00420037.4
(22) Date de dépôt: 17.02.2000
(51) Int. Cl.: A47J 37/12

(54) **Dispositif de sécurité pour appareil électrique de cuisson à cuve amovible**
Sicherheitsvorrichtung für ein elektrisches Kochgerät mit abnehmbarem Behälter
Safety device for an electric cooking vessel with removable tank

(30) Priorité: 19.02.1999 FR 9902261
(43) Date de publication de la demande: 23.08.2000
(73) Titulaire: SEB S.A., 69130 Ecully (FR)
(72) Inventeur: Bizard, Jean-Claude, 21121 Fontaine Les Dijon (FR)

(56) Documents cités:
- WO-A-98/01064
- FR-A- 2 724 835

## Description

La présente invention concerne le domaine technique général des appareils électriques de cuisson à cuve amovible, et concerne notamment les friteuses électriques.

La présente invention se rapporte plus particulièrement aux dispositifs de sécurité de ces appareils.

Dans les friteuses à cuve amovible les moyens de régulation et de protection thermique ne peuvent ni être fixés ni être en contact permanent avec la cuve. Les moyens de régulation et de protection thermique sont alors montés souples pour permettre l'amovibilité de la cuve ainsi qu'un bon contact thermique avec ladite cuve. Ces contraintes sur les moyens de régulation et les moyens de protection thermique impliquent des inerties thermiques et des dérives plus importantes que sur les friteuses à cuve fixe. Ces contraintes impliquent également une moins bonne répétitivité et une moins bonne fiabilité des moyens de régulation et de protection thermique.

En cas de défaillance du thermostat de l'appareil, la protection thermique est réalisée par un élément de sécurité thermique ultime formé par exemple par un fusible thermique ou par un limiteur de sécurité réarmable. Cet élément de sécurité ultime peut également être mis à contribution en cas de chauffe à sec ou de chauffe avec une quantité de matière grasse insuffisante dans la cuve.

Lorsque l'élément de sécurité ultime a été mis à contribution, soit par une défaillance de l'appareil, soit par une négligence de la part de l'utilisateur, l'utilisateur est obligé de faire réparer son appareil. Avec un fusible thermique il est nécessaire de remplacer le fusible fondu en complément du remplacement des éventuels autres éléments défaillants. S'agissant d'un élément de sécurité ultime, il est nécessaire de procéder à un contrôle minutieux après le montage du nouveau fusible. Avec un limiteur thermique réarmable il suffit simplement de réarmer le limiteur en complément du remplacement des éventuels autres éléments défaillants. Ceci simplifie la réparation notamment en cas d'utilisation négligente de l'utilisateur. Toutefois lors de la construction de l'appareil un limiteur thermique réarmable est plus onéreux qu'un fusible thermique.

Il est connu de réaliser des friteuses électriques à cuve amovible comprenant un dispositif de détection de présence de cuve comportant un organe de détection de présence de la cuve coopérant avec un interrupteur prévu pour couper l'alimentation des moyens de chauffe en cas d'absence de la cuve dans le boîtier ou en cas d'un mauvais positionnement de la cuve dans le boîtier. Toutefois un tel dispositif est inopérant notamment lorsque la cuve est correctement mise en place dans le boîtier et que les moyens de chauffe sont alimentés alors que la cuve est vide ou que la cuve comporte une quantité de matière grasse insuffisante.

Il est connu du document FR 2 724 835 une friteuse électrique comportant un boîtier formant un logement prévu pour recevoir une cuve amovible, des moyens de chauffe de la cuve, ainsi qu'un dispositif de sécurité comportant un organe de détection de présence de la cuve. L'organe de détection est monté mobile contre un moyen de rappel entre une première position en présence de la cuve dans le boîtier, et une deuxième position en cas d'absence de la cuve ou de mauvais positionnement de la cuve dans le boîtier. Cette deuxième position correspond à la position de rappel. L'organe de détection du dispositif de sécurité comporte une zone de détection et une zone d'actionnement. La zone de détection est prévue pour coopérer avec la cuve. La zone d'actionnement est prévue pour coopérer avec un interrupteur apte à fermer le circuit d'alimentation des moyens de chauffe lorsque l'organe de détection occupe la première position, l'interrupteur ouvrant le circuit d'alimentation des moyens de chauffe lorsque l'organe de détection occupe la deuxième position. L'organe de détection peut également servir de sécurité thermique en coopérant par conduction thermique avec un thermostat de sécurité. Toutefois, le thermostat de sécurité est un composant supplémentaire.

L'objet de l'invention est de procurer un dispositif de sécurité supplémentaire susceptible d'intervenir avant l'élément de sécurité thermique ultime en cas de chauffe à sec ou de chauffe avec une quantité de matière grasse insuffisante dans une cuve correctement disposée dans le boîtier, dont le coût soit très peu élevé.

Cet objet est atteint avec un dispositif de sécurité d'un appareil électrique de cuisson comportant un boîtier formant un logement prévu pour recevoir une cuve amovible, des moyens de chauffe de la cuve, ledit dispositif comportant un organe de détection de présence de la cuve monté mobile contre un moyen de rappel entre une première position en présence de la cuve dans le boîtier, et une deuxième position en cas d'absence de la cuve ou de mauvais positionnement de la cuve dans le boîtier, correspondant à la position de rappel, l'organe de détection comportant une zone de détection prévue pour coopérer avec la cuve et une zone d'actionnement prévue pour coopérer avec un interrupteur apte à fermer le circuit d'alimentation des moyens de chauffe lorsque ledit organe de détection occupe la première position, l'interrupteur ouvrant le circuit d'alimentation des moyens de chauffe lorsque l'organe de détection occupe la deuxième position, du fait que l'organe de détection comporte une partie susceptible de se déformer lorsque la cuve correctement mise en place dans le boîtier est soumise à une élévation anormale de température, l'organe de détection reprenant alors sous l'action du moyen de rappel sa deuxième position dans laquelle l'interrupteur ouvre le circuit d'alimentation des moyens de chauffe. Ainsi à partir d'une modification mineure d'un dispositif existant il est possible de réaliser un organe de sécurité dont le remplacement est moins onéreux que celui d'un élément de sécurité thermique ultime. De plus si l'appareil est équipé d'un élément de sécurité thermique ultime ce dispositif constitue une sécurité supplémentaire.

Avantageusement la partie susceptible de se déformer forme la zone de détection en contact avec la cuve correctement mise en place dans le boîtier, cette disposition permettant de faciliter la détection de l'élévation anormale de température.

Avantageusement la partie susceptible de se déformer est réalisée en matière plastique, cette disposition permettant également de faciliter la détection de l'élévation anormale de température grâce au changement de la résistance mécanique du matériau.

Avantageusement, pour simplifier la construction et réduire les coûts de fabrication, l'organe de détection est formé en une seule pièce comportant la zone de détection prévue pour coopérer avec la cuve et la zone d'actionnement prévue pour coopérer avec l'interrupteur.

Avantageusement la zone de détection est formée par une paroi de faible épaisseur issue de l'organe de détection et sur laquelle repose un bord de la cuve correctement mise en place dans le boîtier. Par rapport à un dispositif de détection de présence de cuve ne remplissant pas la fonction de sécurité objet de l'invention, il suffit de modifier la partie supérieure actionnée par la cuve.

Avantageusement, l'organe de détection est monté coulissant dans une paroi du boîtier, une telle disposition permettant de réaliser un dispositif fiable et peu onéreux.

Avantageusement, l'organe de détection est monté derrière une paroi latérale extérieure amovible du boîtier. Ainsi il suffit de retirer ladite paroi pour accéder à l'organe de détection et procéder à son remplacement.

Avantageusement l'organe de détection coopère avec un bord de la cuve. Cette disposition facilite l'implantation de l'organe de détection dans le boîtier.

Avantageusement la déformation de la partie de l'organe de détection susceptible de se déformer lorsque la cuve correctement mise en place dans le boîtier est soumise à une élévation anormale de température, est irréversible. Cette disposition empêche l'utilisateur de réutiliser son appareil après la déformation de l'organe de détection.

Cette invention trouve particulièrement son application dans un appareil électrique de cuisson, notamment une friteuse, comportant un boîtier en matière plastique formant un logement prévu pour recevoir une cuve amovible en aluminium. Les friteuses sont en effet soumise à des températures élevées et les moyens de régulations ne tolèrent pas toujours les chauffes à sec ou avec une quantité de matière grasse insuffisante.

L'invention sera mieux comprise à l'étude de l'exemple de réalisation suivant pris à titre nullement limitatif et illustré dans les figures annexées dans lesquelles :
- la figure 1 montre une vue en éclaté d'un dispositif selon l'invention,
- la figure 2 est une vue en coupe de la partie supérieure du dispositif montré à la figure 1.

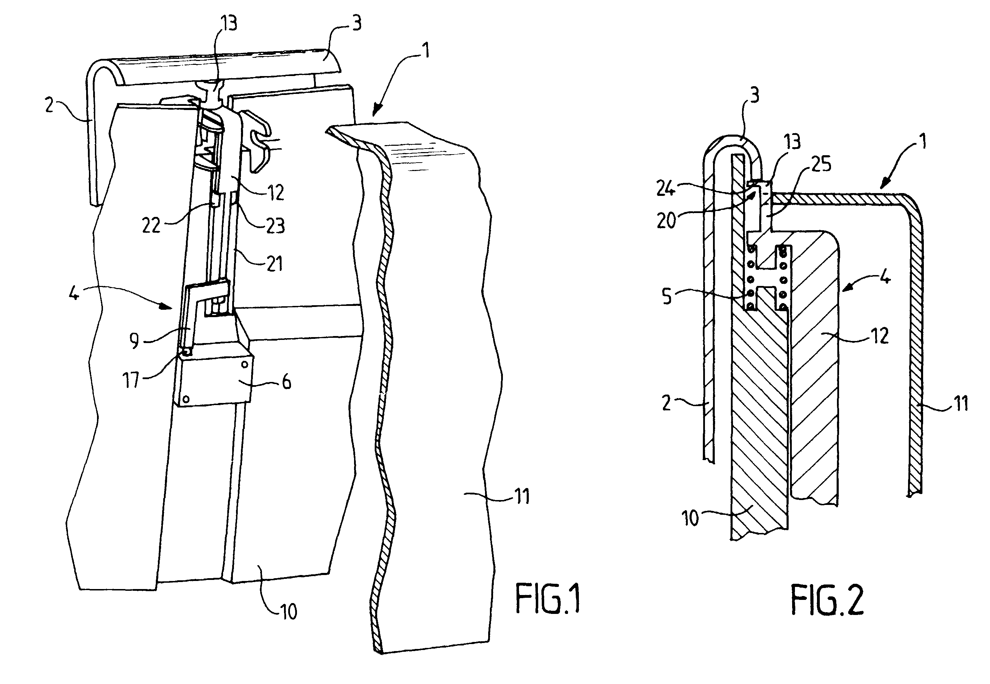

La figure 1 montre un dispositif de sécurité dans un appareil électrique de cuisson comportant un boîtier 1 formant un logement prévu pour recevoir une cuve 2 amovible. Le boîtier comporte une paroi intérieure 10 délimitant le logement de réception de la cuve 2 et une paroi extérieure 11 permettant de loger entre ladite paroi et la paroi intérieure 10 des organes tels qu'un thermostat ou encore un fusible thermique. La paroi 11 est une paroi latérale amovible permettant d'accéder aux moyens de régulation ou de sécurité thermique de l'appareil (non montrés à la figure).

Le dispositif de sécurité comporte un organe de détection 4 de présence de la cuve 2. L'organe de détection 4 est formé en une seule pièce en matière plastique, de préférence du polyéthylène ou encore du polypropylène.

L'organe 4 est disposé dans le boîtier 1 entre les parois 10 et 11. L'organe de détection 4 comporte une tige 12 monté coulissante dans une rainure 21 de la paroi 10 du boîtier 1. On remarquera les deux guides 22, 23 entre lesquels coulisse la tige 12. La tige 12 porte un ergot 13 prévu pour coopérer avec le bord retourné 3 de la cuve 2 et une patte 9 prévue pour coopérer avec le bouton 17 d'un interrupteur 6. L'ergot 13 forme ainsi une zone de détection de la cuve 2 et la patte 9 forme une zone d'actionnement de l'interrupteur 6.

La figure 2 montre l'organe de détection 4 monté mobile contre un moyen de rappel 5.

Tel que représenté à la figure 1 lorsque la cuve 2 est présente dans le boîtier 1 l'organe de détection 4 occupe une première position enfoncée dans laquelle l'interrupteur 6 est susceptible de fermer le circuit d'alimentation des moyens de chauffe de l'appareil (non montrés aux figures), le bouton d'interrupteur 17 étant alors enfoncé.

En cas d'absence de la cuve 2 ou en cas ou de mauvais positionnement de la cuve 2 dans le boîtier 1, l'organe de détection 4 occupe une deuxième position relevée, correspondant à la position de rappel, dans laquelle l'interrupteur 6 coupe l'alimentation des moyens de chauffe, le bouton d'interrupteur 17 étant alors relevé.

Selon l'invention l'organe 4 de détection de présence de la cuve 2 comporte une partie 20 susceptible de se déformer lorsque la cuve 2 correctement mise en place dans le boîtier 1 est soumise à une élévation anormale de température, l'organe de détection 4 reprenant alors sous l'action du moyen de rappel 5 sa deuxième position dans laquelle l'interrupteur 6 ouvre le circuit d'alimentation de l'appareil.

Par élévation anormale de température de la cuve 2 correctement mise en place dans le boîtier 1 il convient d'entendre que la cuve 2 atteint des températures supérieures à celles relevées lors des conditions de fonctionnement normales de l'appareil, soit parce que la cuve ne comporte pas de bain de cuisson, soit parce que la cuve comporte une quantité insuffisante de bain de cuisson, soit parce qu'un ou plusieurs blocs entiers de matière grasse solide ont été mis à fondre dans la cuve, soit par suite d'une défaillance des moyens de régulation de l'appareil. Les températures atteintes sur la partie supérieure de la cuve sont par exemple de l'ordre de 135°C dans le cas d'un fonctionnement normal, de l'ordre de 190°C en cas de chauffe à sec, voire davantage en cas de défaillance du thermostat.

Tel que montré à la figure 2, l'ergot 13 est constitué par un montant 25, issu de la tige 12, le montant 25 étant prolongé par une paroi 24 de faible épaisseur sur laquelle repose le bord 3 de la cuve 2 correctement mise en place dans le boîtier 1. On notera que le moyen de rappel 5 est monté sur la tige 12 entre la paroi 24 et la patte 9.

Le dispositif selon l'invention fonctionne de la manière suivante.

Lorsque la cuve 2 est correctement disposée dans le boîtier 1 le rebord 3 de la cuve 2 repose sur la paroi 24.

En cas de négligence de l'utilisateur telle que la mise en chauffe de l'appareil sans matière grasse dans la cuve 2 ou encore avec une quantité insuffisante de matière grasses dans la cuve, la température de la cuve s'élève rapidement jusqu'à atteindre les valeurs précitées, créant ainsi une surchauffe de la partie supérieure du boîtier 1 sur laquelle repose la cuve 2. En cas de défaillance des moyens de régulation, la température en partie supérieure de la cuve peut atteindre des valeurs supérieures et même dépasser 220°C.

Cette situation est d'autant plus gênante lorsque le boîtier 1 est réalisé en matière plastique, et en particulier lorsqu'une matière plastique présentant une tenue thermique médiocre, telle que le polypropylène, est utilisée pour réaliser une partie du boîtier 1 se trouvant à proximité de la partie supérieure de la cuve. La surchauffe d'une partie du boîtier peut entraîner des déformations permanentes du boîtier susceptibles de compromettre une utilisation correcte de l'appareil, si par exemple l'étanchéité entre un couvercle (non montré aux figures) et le boîtier 1 est affectée.

Lorsque la cuve 2 est réalisée en aluminium, revêtu ou non, la transmission de la chaleur s'effectue rapidement en l'absence d'une quantité suffisante de bain de cuisson susceptible d'absorber les calories issues des moyens de chauffe.

Lorsque la température du bord 3 de la cuve 2 s'élève, la température de la paroi 24 s'élève aussi jusqu'à atteindre une valeur pour laquelle l'effort exercé par le moyen de rappel 5 contribue à déformer ladite paroi. La paroi 24 forme ainsi la partie 20 susceptible de se déformer lorsque la cuve 2 correctement mise en place dans le boîtier 1 est soumise à une élévation anormale de température. La déformation thermique sous contrainte de la matière plastique de la paroi 24 est irréversible et la paroi 24 s'affaisse. Sous l'action du moyen de rappel 5 la tige 12 peut alors coulisser entre les guides 21, 22 jusqu'à ce que la patte 9 relâche le bouton 17 de l'interrupteur 6 qui ouvre alors le circuit électrique d'alimentation des moyens de chauffe.

L'appareil ne peut plus fonctionner mais le remplacement de l'organe de détection 4 peut s'effectuer aisément en retirant la paroi 11 du boîtier 1.

De nombreuses améliorations peuvent être apportées à ce dispositif dans le cadre des revendications.

A titre de variante le moyen de rappel 5 pourrait être supprimé si le moyen de rappel associé au bouton 17 de l'interrupteur 6 est susceptible d'exercer un effort suffisant pour assurer le rappel de l'organe de détection 4 lorsque la cuve 2 est retirée du boîtier 1 ou pour déformer la paroi 24 lorsque la cuve 2 correctement mise en place dans le boîtier 1 est soumise à une élévation anormale de température.

A titre de variante l'organe de détection pourrait comprendre ou être formé par une pièce métallique déformable, par exemple une lamelle bimétallique ou encore une pièce en alliage à mémoire de forme. La déformation de la pièce déformable peut alors être réversible ou irréversible.

L'interrupteur 6 peut être formé par tout type de moyens de coupure du circuit d'alimentation, et notamment par des moyens optiques ou magnétiques.

## Revendications

1. Dispositif de sécurité d'un appareil électrique de cuisson comportant un boîtier (1) formant un logement prévu pour recevoir une cuve (2) amovible, des moyens de chauffe de la cuve (2), ledit dispositif comportant un organe de détection (4) de présence de la cuve (2) monté mobile contre un moyen de rappel (5) entre une première position en présence de la cuve (2) dans le boîtier (1), et une deuxième position en cas d'absence de la cuve (2) ou de mauvais positionnement de la cuve (2) dans le boîtier (1), correspondant à la position de rappel, l'organe de détection (4) comportant une zone de détection prévue pour coopérer avec la cuve (2) et une zone d'actionnement prévue pour coopérer avec un interrupteur (6) apte à fermer le circuit d'alimentation des moyens de chauffe lorsque ledit organe de détection (4) occupe la première position, l'interrupteur (6) ouvrant le circuit d'alimentation des moyens de chauffe lorsque l'organe de détection (4) occupe la deuxième position, **caractérisé en ce que** l'organe de détection (4) comporte une partie (20) susceptible de se déformer lorsque la cuve (2) correctement mise en place dans le boîtier (1) est soumise à une élévation anormale de température, l'organe de détection (4) reprenant alors sous l'action du moyen de rappel sa deuxième position dans laquelle l'interrupteur (6) ouvre le circuit d'alimentation des moyens de chauffe.

2. Dispositif selon la revendication 1, **caractérisé en ce que** la partie (20), susceptible de se déformer lorsque la cuve (2) correctement mise en place dans le boîtier (1) est soumise à une élévation anormale de température, forme la zone de détection se trouvant au contact de la cuve (2) correctement mise en place dans le boîtier (1).

3. Dispositif selon l'une des revendications 1 ou 2, **caractérisé en ce que** la partie (20), susceptible de se déformer lorsque la cuve (2) correctement mise en place dans le boîtier (1) est soumise à une élévation anormale de température, est réalisée en matière plastique.

4. Dispositif selon l'une des revendications 1 à 3, **caractérisé en ce que** l'organe de détection (4) est formé en une seule pièce comportant la zone de détection prévue pour coopérer avec la cuve (2) et la zone d'actionnement prévue pour coopérer avec l'interrupteur (6).

5. Dispositif selon l'une des revendications 1 à 4, **caractérisé en ce que** la zone de détection est formée par une paroi (24) de faible épaisseur, issue de l'organe de détection (4), et sur laquelle repose un bord (3) de la cuve (2) correctement mise en place dans le boîtier (1).

6. Dispositif selon l'une des revendications 1 à 5, **caractérisé en ce que** l'organe de détection (4) est monté coulissant dans une paroi (10) du boîtier (1).

7. Dispositif selon l'une des revendications 1 à 6, **caractérisé en ce que** l'organe de détection (4) est monté derrière une paroi latérale (11) extérieure amovible du boîtier (1).

8. Dispositif selon l'une des revendications 1 à 7, **caractérisé en ce que** l'organe de détection (4) coopère avec un bord (3) de la cuve (2).

9. Dispositif selon l'une des revendications 1 à 8, **caractérisé en ce que** la déformation de la partie (20), susceptible de se déformer lorsque la cuve (2) correctement mise en place dans le boîtier (1) est soumise à une élévation anormale de température, est irréversible.

10. Appareil électrique de cuisson, notamment friteuse, comportant un boîtier (1) formant un logement prévu pour recevoir une cuve (2) amovible, des moyens de chauffe de la cuve, et un dispositif selon l'une des revendications 1 à 9, **caractérisé en ce que** la cuve (2) est réalisée en aluminium.

11. Appareil électrique de cuisson, notamment friteuse, comportant un boîtier (1) formant un logement prévu pour recevoir une cuve (2) amovible, des moyens de chauffe de la cuve, et un dispositif selon l'une des revendications 1 à 9, **caractérisé en ce que** le boîtier (1) est réalisé en matière plastique.

## Patentansprüche

1. Sicherheitsvorrichtung für ein elektrisches Kochgerät mit einem Gehäuse (1), das einen zur Aufnahme einer abnehmbaren Wanne (2) vorgesehenen Sitz bildet, Heizmitteln für die Wanne (2), wobei die Vorrichtung ein Organ (4) zum Erfassen der Anwesenheit der Wanne (2) aufweist, das beweglich gegen ein Rückstellmittel (5) zwischen einer ersten Position in Anwesenheit der Wanne (2) in dem Gehäuse (1) und einer zweiten Position bei Abwesenheit der Wanne (2) oder einer schlechten Positionierung der Wanne (2) in dem Gehäuse (1) angebracht ist, die der Rückstellposition entspricht, wobei das Erfassungsorgan (4) eine Erfassungszone, die zum Zusammenwirken mit der Wanne (2) vorgesehen ist, und eine Betätigungszone aufweist, die zum Zusammenwirken mit einem Schalter (6) vorgesehen ist, der zum Schließen des Versorgungskreises für die Heizmittel geeignet ist, wenn das Erfassungsorgan (4) die erste Position einnimmt, wobei der Schalter (6) den Versorgungskreis für die Heizmittel öffnet, wenn das Erfassungsorgan (4) die zweite Position einnimmt, **dadurch gekennzeichnet, daß** das Erfassungsorgan (4) einen Teil (20) aufweist, der sich verformen kann, wenn die korrekt in das Gehäuse (1) eingesetzte Wanne (2) einer anomalen Temperaturerhöhung unterworfen ist, wobei das Erfassungsorgan (4) dann unter der Wirkung des Rückstellmittels wieder seine zweite Position einnimmt, in der der Schalter (6) den Versorgungskreis für die Heizmittel öffnet.

2. Vorrichtung nach Anspruch 1, **dadurch gekennzeichnet, daß** der Teil (20), der sich verformen kann, wenn die korrekt in das Gehäuse (1) eingesetzte Wanne (2) einer anomalen Temperaturerhöhung unterworfen ist, die Erfassungszone bildet, die sich mit der Wanne (2) in Kontakt befindet, die korrekt in das Gehäuse (1) eingesetzt ist.

3. Vorrichtung nach einem der Ansprüche 1 oder 2, **dadurch gekennzeichnet, daß** der Teil (20), der sich verformen kann, wenn die korrekt in das Gehäuse (1) eingesetzte Wanne (2) einer anomalen Temperaturerhöhung unterworfen ist, aus Kunststoff hergestellt ist.

4. Vorrichtung nach einem der Ansprüche 1 bis 3, **dadurch gekennzeichnet, daß** das Erfassungsorgan (4) aus einem einzigen Stück gebildet ist, das die zum Zusammenwirken mit der Wanne (2) vorgesehene Erfassungszone und die zum Zusammenwirken mit dem Schalter (6) vorgesehene Betätigungszone aufweist.

5. Vorrichtung nach einem der Ansprüche 1 bis 4, **dadurch gekennzeichnet, daß** die Erfassungszone durch eine Wand (24) geringer Dicke gebildet ist, die aus dem Erfassungsorgan (4) hervorgeht und auf der ein Rand (3) der korrekt in das Gehäuse (1) eingesetzten Wanne (2) ruht.

6. Vorrichtung nach einem der Ansprüche 1 bis 5, **dadurch gekennzeichnet, daß** das Erfassungsorgan (4) gleitend in einer Wand (10) des Gehäuses (1) angebracht ist.

7. Vorrichtung nach einem der Ansprüche 1 bis 6, **dadurch gekennzeichnet, daß** das Erfassungsorgan (4) hinter einer abnehmbaren äußeren Seitenwand (11) des Gehäuses (1) angebracht ist.

8. Vorrichtung nach einem der Ansprüche 1 bis 7, **dadurch gekennzeichnet, daß** das Erfassungsorgan (4) mit einem Rand (3) der Wanne (2) zusammenwirkt.

9. Vorrichtung nach einem der Ansprüche 1 bis 8, **dadurch gekennzeichnet, daß** die Verformung des Teils (20), der sich verformen kann, wenn die korrekt in das Gehäuse (1) eingesetzte Wanne (2) einer anomalen Temperaturerhöhung unterworfen ist, irreversibel ist.

10. Elektrisches Kochgerät, insbesondere eine Friteuse, mit einem Gehäuse (1), das einen zur Aufnahme einer abnehmbaren Wanne (2) vorgesehenen Sitz bildet, Heizmitteln für die Wanne, und einer Vorrichtung nach einem der Ansprüche 1 bis 9, **dadurch gekennzeichnet, daß** die Wanne (2) aus Aluminium hergestellt ist.

11. Elektrisches Kochgerät, insbesondere eine Friteuse, mit einem Gehäuse (1), das einen zur Aufnahme einer abnehmbaren Wanne (2) vorgesehenen Sitz bildet, Heizmitteln für die Wanne, und einer Vorrichtung nach einem der Ansprüche 1 bis 9, **dadurch gekennzeichnet, daß** das Gehäuse (1) aus Kunststoff hergestellt ist.

## Claims

1. A safety device for an electric cooking appliance comprising a case (1) forming a housing for receiving a removable vessel (2) and heater means for heating the vessel (2), said device comprising a detector member (4) for detecting the presence of the vessel (2), the detector member being mounted against return means (5) to move between a first position when the vessel (2) is present in the case (1) and a second position, corresponding to the return position, in the event of the vessel (2) being absent or in the event of the vessel (2) being wrongly positioned in the case (1), the detector member (4) having a detection zone designed to co-operate with the vessel (2) and an actuation zone designed to co-operate with a switch (6) suitable for closing the power supply circuit to the heater means when said detector member (4) is in its first position, the switch (6) breaking the power supply circuit of the heater means when the detector member (4) is its second position, the device being **characterized in that** the detector member (4) includes a portion (20) suitable for deforming when the vessel (2) properly positioned in the case (1) is subjected to an abnormal temperature rise, the detector member (4) then being driven by the return means into its second position in which the switch (6) breaks the power supply circuit of the heater means.

2. A device according to claim 1, **characterized in that** the portion (20) which deforms when the properly positioned vessel (2) in the case (1) is subjected to an abnormal temperature rise, forms the detection zone which is in contact with the vessel (2) when properly placed in the case (1).

3. A device according to claim 1 or claim 2, **characterized in that** the portion (20) that deforms when the vessel (2) correctly positioned in the case (1) is subjected to an abnormal temperature rise is made of plastics material.

4. A device according to any one of claims 1 to 3, **characterized in that** the detector member (4) is formed as a single piece comprising the detection zone for co-operating with the vessel (2) and the actuator zone designed to co-operate with the switch (6).

5. A device according to any one of claims 1 to 4, **characterized in that** the detector zone is formed by a thin wall (24) coming from the detector member (4), and against which there rests an edge (3) of the vessel (2) when the vessel (2) is correctly positioned in the case (1).

6. A device according to any one of claims 1 to 5, **characterized in that** the detector member (4) is mounted to slide in a wall (10) of the case (1).

7. A device according to any one of claims 1 to 6, **characterized in that** the detector member (4) is mounted behind a removable outer side wall (11) of the case (1).

8. A device according to any one of claims 1 to 7, **characterized in that** the detector member (4) co-operates with an edge (3) of the vessel (2).

9. A device according to any one of claims 1 to 8, **characterized in that** the deformation of the portion (20) that deforms when the vessel (2) correctly positioned in the case (1) is subjected to an abnormal temperature rise, is irreversible.

10. An electric cooking appliance, in particular a fryer, comprising a case (1) forming a housing for receiving a removable vessel (2), means for heating the vessel, and a device according to any one of claims 1 to 9, **characterized in that** the vessel (2) is made of aluminum.

11. An electric cooking appliance, in particular a fryer, comprising a case (1) forming a housing for receiving a removable vessel (2), means for heating the vessel, and a device according to any one of claims 1 to 9, **characterized in that** the vessel (2) is made of plastics material.
